# EUROPEAN PATENT SPECIFICATION

(11) **EP 4 619 654 B1**
(45) Date of publication and mention of the grant of the patent: **14.10.2026**
(21) Application number: 23798528.8
(22) Date of filing: 30.10.2023
(51) Int. Cl.: F16D 65/092, B60T 17/22, F16D 65/12, F16D 66/02, F16D 65/02

(54) **METHOD FOR CHECKING THE RESIDUAL THICKNESS OF A BRAKE DISC FOR A MOTOR-VEHICLE DISC BRAKE DEVICE**
VERFAHREN ZUR ÜBERPRÜFUNG DER RESTDICKE EINER BREMSSCHEIBE FÜR EINE KRAFTFAHRZEUG-SCHEIBENBREMSVORRICHTUNG
PROCÉDÉ DE VÉRIFICATION DE L'ÉPAISSEUR RÉSIDUELLE D'UN DISQUE DE FREIN POUR UN DISPOSITIF DE FREIN À DISQUE DE VÉHICULE AUTOMOBILE

(30) Priority: 15.11.2022 IT 202200023496
(43) Date of publication of application: 24.09.2025
(73) Proprietor: Stellantis Europe S.p.A., 10135 Torino (TO) (IT)
(72) Inventor: BADINO, Renato, 10135 Torino (IT); IELUZZI, Michele, 10043 Orbassano (Torino) (IT); BAUSCH, Olaf, 10135 Torino (IT); EHRLICH, Dirk, 10135 Torino (IT)
(74) Representative: Buzzi, Notaro & Antonielli d'Oulx S.p.A.
(86) International application number: PCT/IB2023/060920
(87) International publication number: WO 2024/105482

(56) References cited:
- EP-A1- 3 971 440
- EP-A1- 3 971 440
- CN-A- 114 857 190
- CN-A- 114 857 190
- US-A1- 2021 033 157
- US-A1- 2021 033 157

## Description

### Field of the invention

The present invention relates generally to brake discs for automotive disc brake devices, of the type having a disc body comprising a central hub and a wall surrounding the central hub and having an outer circumferential portion with two opposite faces defining annular surfaces acting as braking surfaces, for the engagement by a brake caliper of a disc brake device.

More particularly, the present invention concerns a method for controlling the residual thickness of a brake disc for automotive disc brake devices.

### Prior art

With reference to the brake discs of the type indicated above, it is known that the thickness of the braking surfaces - defined by the wall surrounding the central hub - is reduced over the life of the motor-vehicle, due to the braking action applied with the brake pads carried by the brake caliper, which are pressed by the caliper against the rotating disc. In fact, maintenance operations on disc brake devices involve not only the periodic replacement of the pads, but also the replacement of the brake discs, which, as indicated above, are subjected to wear due to the braking action exerted by the pads.

To date, international regulations for the approval of motor-vehicles require that the minimum thickness of the braking surfaces be indicated on the brake disc, below which the disc must necessarily be replaced, as the performance and safety requirements could be significantly impaired.

Generally, for a traditional brake disc made of cast iron or steel, a reduction in thickness of 1.5 - 3 mm is considered allowed before proceeding with the replacement of the disc. During maintenance and/or periodic assistance, the residual thickness of the brake disc can be easily measured - with an excellent degree of precision and reliability - using classic workshop tools, such as caliper or micrometer, to evaluate whether the thickness of the braking band is reduced by the values indicated above, and therefore determine whether the component needs to be replaced or not.

Document US20130174656 illustrates a further method for evaluating the wear of the brake disc and determining whether it needs to be replaced.

Again with reference to the wear of brake discs, motor-vehicle manufacturers are taking into consideration new regulations for future registrations, aimed at regulating restrictive limits on the emission of particulates generated by braking for both disc brakes and drum brakes. In fact, it has been demonstrated that the brake disc is a considerable contributor to the formation and dispersion of PM 10 and PM 2.5 particulates in the air, which is the subject of the aforementioned new regulations.

Therefore, manufacturers are consolidating various brake disc solutions aimed at limiting the dispersion of polluting particulates into the air, in order to comply with the new regulations. Among these solutions, the application of a coating of a high-resistance material on the braking bands is envisaged, in order to reduce the wear of the disc due to the braking action, and therefore the particulates generated by the brake disc. For this brake disc solution, the thickness reduction allowed - in order to comply with the new regulations - is significantly lower than the values indicated above for traditional cast iron discs. It is therefore extremely difficult to detect with traditional workshop tools whether the brake disc needs to be replaced, even considering the manufacturing dimensional tolerances of the brake disc. Document EP 3 971 440 A1 also discloses a method for checking the residual thickness of a brake disc for a disc brake device, having a disc body comprising a central hub and a wall surrounding the central hub having an outer circumferential portion with two opposite faces defining two annular surfaces constituting disc braking surfaces, wherein the braking surfaces are coated with a high-resistance material configured for reducing the wear of the disc due to the braking action applied with brake pads carried by a brake caliper, wherein said material comprises a double-layer coating with materials of different composition.

Therefore, the present invention starts from the desire to propose a reliable method for checking the residual thickness of a brake disc in order to determine whether the component has reached its end-of-life, in relation to the technical brake disc solutions designed to comply with the aforementioned regulations relating to the emission of particulates generated by braking.

### Object of the invention

The object of the present invention is to propose a method for checking the residual thickness of a brake disc and reliably signaling whether the disc necessarily needs to be replaced.

A further object of the invention is to carry out this method with relatively simple and low-cost means.

### Summary of the invention

According to one or more embodiments, the above-mentioned objects are achieved through a method having the features specifically set out in the attached claims.

### Brief description of the figures

Further features and advantages of the invention will emerge from the following description with reference to the attached drawings, provided purely by way of non-limiting example, in which:
- figure 1 is a perspective view of a conventional solid wall brake disc,
- figure 2 is a schematic view illustrating a step of a method for evaluating the residual thickness of the brake disc, according to a conventional technique,
- figure 3 is a schematic view illustrating a preferred embodiment of a brake disc, on which the method according to the invention is applicable, and
- figure 4 is a front view of the brake disc of the previous figure, on which a step of the method according to the invention is carried out.

### Detailed description of several embodiments

The following description illustrates various specific details aimed at an in-depth understanding of examples of one or more embodiments. The embodiments may be carried out without one or more of the specific details, or with other methods, components, materials etc. In other cases, known structures, materials or operations are not shown or described in detail to avoid obscuring various aspects of the embodiments. The reference to "an/one embodiment" within this specification is to indicate that a particular configuration, structure or feature described in connection with the embodiment is included in at least one embodiment. Thus, phrases such as "in an/one embodiment", possibly present in different places in this specification, do not necessarily refer to the same embodiment. Furthermore, particular conformations, structures or features can be combined appropriately in one or more embodiments and/or associated with the embodiments in a different way from as illustrated here, so for example a feature exemplified here in relation to a figure it may be applied to one or more embodiments exemplified in a different figure

The references illustrated here are for convenience only and therefore do not delimit the extent of protection or the scope of the embodiments.

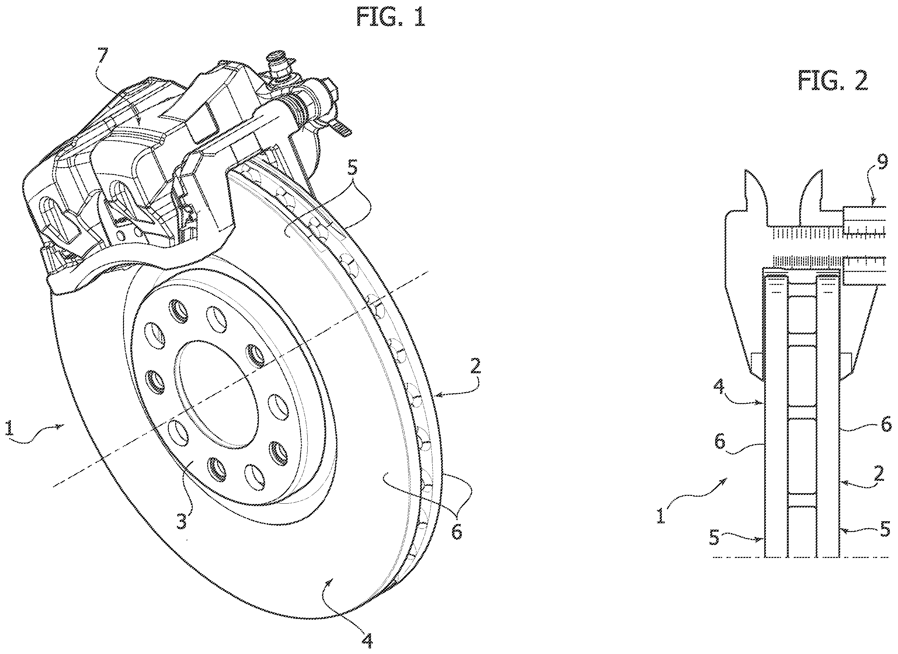

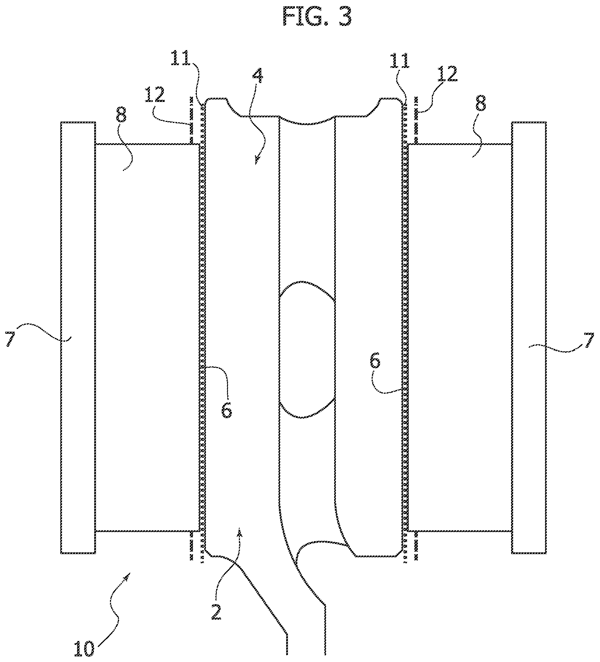

Figure 1 shows a brake disc 1 of conventional type, comprising a disc body 2 which includes a hub 3 surrounded by a wall 4. The wall 4 is a flat wall and defines, with its two opposite faces, two annular surfaces 5 constituting the braking surfaces 6 of the disc 1. Reference 7 indicates a brake caliper of any known type, equipped with brake pads 8 (illustrated in figure 3) arranged to be pressed by a respective actuator against the two opposite faces of the brake disc 1, to slow down its rotation during a braking phase of the vehicle. In other words, the two opposite annular flat faces of the disc 1 cooperate with the brake pads 8 to develop the braking effect.

The international regulations for the approval of motor-vehicles require that the minimum thickness of the braking surfaces 6 is indicated on the brake disc 1, below which the disc 1 must necessarily be replaced, as the performance and safety requirements could be significantly impaired.

Generally, for a traditional brake disc made of cast iron or steel - such as the one illustrated in figure 1 - a reduction in thickness of 1.5 - 3 mm is considered allowed before proceeding with the replacement of the disc 1. During maintenance and /or periodic assistance, the residual thickness of the brake disc 1 can be easily measured - with an excellent degree of precision and reliability - using classic workshop tools, such as caliper or micrometer, to evaluate whether the thickness of the braking band has reduced by the values indicated above, and therefore determine whether or not the component needs to be replaced.

In this context, figure 2 is a schematic view illustrating a step of a method for evaluating the residual thickness of the brake disc 1, according to a conventional technique. As illustrated in figure 2, the thickness of disc 1 is measured using a 9 gauge, useful for evaluating the thickness of disc 1 and determining whether the brake disc has reached its end-of-life.

Figure 3 is a schematic view illustrating an embodiment of a brake disc 10 on which the method according to the invention is applicable.

The brake disc 10 is constructionally designed to limit the dispersion of particulates generated by braking into the air, so as to comply with the relevant registration regulations. For this purpose, the braking surfaces 6 of the disc 10 are both coated with high-resistance material, so as to reduce the wear of the disc 10 due to the braking action, and therefore reduce the particulates generated by the brake disc 10. For such brake disc 10 the wear from braking action is therefore significantly lower than that of traditional cast iron discs.

In one or more embodiments, such as that illustrated in figure 3, the coating on the braking surfaces 6 is a double-layer coating with materials of different composition. The coating comprises a first layer 11 superimposed on the base material of the disc 10 and a second layer 12 superimposed on the first layer 11.

In one or more embodiments, the first layer 11 is applied to the base material of the disc 10 by processing with a laser beam. The material of the first layer 11 is in the form of powders which are fused onto the disk 10 by operating a laser head.

According to a preferred embodiment, the coating on the braking surfaces 6 comprises a first layer 11 based on austenitic (non-magnetic) stainless-steel powders, and a second layer 12, superimposed on said first layer 11, of ferritic stainless-steel (magnetic). Preferably, the second layer 12 is made from a mixture of carbide powders (for example Ti, Cr, Co, W, etc.) and ferritic stainless-steel.

In one or more embodiments, the layers 11,12 can be applied on the disk 10 with methods such as "laser cladding", "High Velocity Oxygen Fuel - HVOF", "cold spray", etc., starting from powders based on oxides or carbides.

The configuration of the brake disc 10 with double layer as indicated above, in addition to reducing wear compared to traditional discs, also prevents the formation of cracks, protects against oxidation, and avoids the dispersion of nickel into the air, which is particularly subjected to regulatory restrictions.

In one or more embodiments, the second layer 12 has a thickness of the order of 0.1 - 0.15 mm.

In the context of the method of the invention applicable for the brake disc 10 as described above, the residual thickness of the second layer 12 is discriminating in deciding whether or not to proceed with the replacement of the disc 10. More particularly, in the case the second layer 12 is completely worn in the contact area with the brake pads 8 (as illustrated in figure 3), the disc 10 will have to be replaced to prevent the pads 8 from starting to wear the first layer 11 and, in a short time, also the disc body 2 (for example made of cast iron). Considering the thickness of the second layer 12 and the importance of carrying out a precise check on its state of wear, it is incompatible to measure a dimension of the order of 0.1 - 0.15 mm with traditional workshop tools, even considering the manufacturing dimensional tolerances of the brake disc 10.

Considering that the first layer 11 is of non-magnetic material and the second layer is of magnetic material, the method according to the invention involves the preparation of a magnet M to be applied on the braking surfaces 6 of the disc 10, to evaluate the residual thickness of the disc 10 and determine with certainty the wear of the aforementioned second layer 12. The magnet M can be a natural magnet, sized so as to be able to give reliable feedback on the presence or absence of magnetic force exerted with the second layer 12.

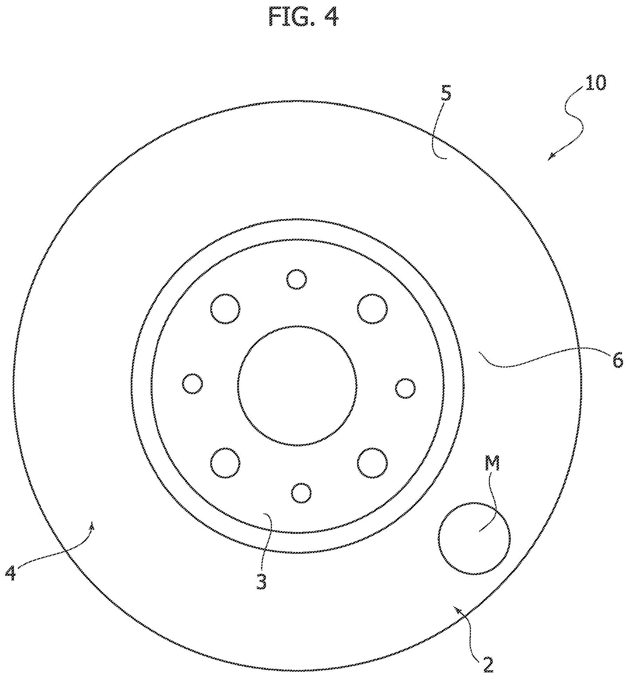

As illustrated in figure 4, the method according to the invention involves a step of placing the magnet M on one of the two opposite faces defining the braking surfaces 6 of the disk 10, and determining whether the magnet M is subjected to a magnetic attraction force towards the braking surface 6.

If the second layer 12 is no longer present, because it is completely worn, the magnet M will not be subjected to any force of attraction towards the front surface of the disk 10, as only the first non-magnetic layer 11 is present.

Of course, the aforementioned step of placing the magnet M can be carried out for both braking surfaces 6 of the disc 10, so as to determine the wear of the second layer 12 on both faces of the disc 10.

In light of what has been described, it should therefore be noted that the provision on the braking surfaces 6 of a lower layer 11 and an upper layer 12 with high-resistance materials, respectively non-magnetic and magnetic, allows the wear of the upper layer 12 to be assessed, to determine precisely the need, or not, to replace the disc 10, and limit the dispersion of particulates generated by braking into the air.

Of course, notwithstanding the principle of the invention, the construction details and the embodiments may vary widely with respect to what is described and illustrated purely by way of example, without thereby departing from the scope of the present invention as defined in the attached claims.

## Claims

1. Method for checking the residual thickness of a brake disc (10) for a disc brake device, having a disc body (2) comprising a central hub (3) and a wall (4) surrounding the central hub (3) having an outer circumferential portion with two opposite faces defining two annular surfaces (5) constituting disc braking surfaces (6),
- wherein the braking surfaces (6) are coated with a high-resistance material configured for reducing the wear of the disc (10) due to the braking action applied with brake pads (8) carried by a brake caliper (7),
- wherein said material comprises a double-layer coating with materials of different composition, formed by a first layer (11) of non-magnetic material and by a second layer (12), superimposed on said first layer (11), of magnetic material,
said method comprising the steps of
- providing a magnet (M) to be applied on the disc braking surfaces (6), to evaluate the residual thickness of the disc (10) and the wear of said second layer (12),
- placing the magnet (M) on one of the two opposite faces defining the disc braking surfaces (6),
- determining whether the magnet (M) is subjected to a magnetic attraction force towards the braking surface (6).

2. Method according to claim 1, wherein said first layer (11) is based on austenitic stainless-steel powders.

3. Method according to claim 1 or 2, said second layer (12) is made of ferritic stainless-steel.

4. Method according to claim 3, wherein said second layer (12) is made from a mixture of carbide powders and ferritic stainless-steel.

5. Method according to any of the previous claims, wherein the second layer (12) has a thickness of 0.1 - 0.15 mm.

## Patentansprüche

1. Verfahren zur Überprüfung der Restdicke einer Bremsscheibe (10) für eine Scheibenbremsvorrichtung, mit einem Scheibenkörper (2), umfassend eine zentrale Nabe (3) und eine die zentrale Nabe (3) umgebende Wand (4) mit einem äußeren Umfangsabschnitt mit zwei gegenüberliegenden Flächen, die zwei Ringflächen (5) definieren, welche Scheibenbremsflächen (6) bilden,
- wobei die Bremsflächen (6) mit einem hochfesten Material beschichtet sind, das dazu ausgebildet ist, den Verschleiß der Scheibe (10) aufgrund der mit von einem Bremssattel (7) getragenen Bremsbelägen (8) ausgeübten Bremswirkung zu verringern,
- wobei das genannte Material eine Doppelschichtbeschichtung mit Materialien unterschiedlicher Zusammensetzung umfasst, gebildet durch eine erste Schicht (11) aus nichtmagnetischem Material und durch eine zweite Schicht (12), die auf der genannten ersten Schicht (11) angeordnet ist, aus magnetischem Material,
wobei das genannte Verfahren die Schritte umfasst
- Bereitstellen eines Magneten (M), der auf die Scheibenbremsflächen (6) aufgebracht werden soll, um die Restdicke der Scheibe (10) und den Verschleiß der genannten zweiten Schicht (12) zu bewerten,
- Anordnen des Magneten (M) auf einer der beiden gegenüberliegenden Flächen, die die Scheibenbremsflächen (6) definieren,
- Bestimmen, ob der Magnet (M) einer magnetischen Anziehungskraft in Richtung der Bremsfläche (6) ausgesetzt ist.

2. Verfahren nach Anspruch 1, wobei die genannte erste Schicht (11) auf austenitischen Edelstahlpulvern basiert.

3. Verfahren nach Anspruch 1 oder 2, wobei die genannte zweite Schicht (12) aus ferritischem Edelstahl besteht.

4. Verfahren nach Anspruch 3, wobei die genannte zweite Schicht (12) aus einer Mischung von Karbidpulvern und ferritischem Edelstahl hergestellt ist.

5. Verfahren nach einem der vorhergehenden Ansprüche, wobei die zweite Schicht (12) eine Dicke von 0,1 - 0,15 mm aufweist.

## Revendications

1. Procédé de vérification de l'épaisseur résiduelle d'un disque de frein (10) pour un dispositif de frein à disque, comportant un corps de disque (2) comprenant un moyeu central (3) et une paroi (4) entourant le moyeu central (3) ayant une partie circonférentielle externe avec deux faces opposées définissant deux surfaces annulaires (5) constituant des surfaces de freinage (6) du disque,
- dans lequel les surfaces de freinage (6) sont revêtues d'un matériau à haute résistance configuré pour réduire l'usure du disque (10) due à l'action de freinage appliquée avec des plaquettes de frein (8) portées par un étrier de frein (7),
- dans lequel ledit matériau comprend un revêtement à double couche avec des matériaux de composition différente, formé par une première couche (11) de matériau non magnétique et par une seconde couche (12), superposée à ladite première couche (11), de matériau magnétique,
ledit procédé comprenant les étapes de
- fourniture d'un aimant (M) destiné à être appliqué sur les surfaces de freinage (6) du disque, pour évaluer l'épaisseur résiduelle du disque (10) et l'usure de ladite seconde couche (12),
- placement de l'aimant (M) sur l'une des deux faces opposées définissant les surfaces de freinage (6) du disque,
- détermination du fait que l'aimant (M) est soumis ou non à une force d'attraction magnétique vers la surface de freinage (6).

2. Procédé selon la revendication 1, dans lequel ladite première couche (11) est à base de poudres d'acier inoxydable austénitique.

3. Procédé selon la revendication 1 ou 2, ladite seconde couche (12) est en acier inoxydable ferritique.

4. Procédé selon la revendication 3, dans lequel ladite seconde couche (12) est réalisée à partir d'un mélange de poudres de carbure et d'acier inoxydable ferritique.

5. Procédé selon l'une quelconque des revendications précédentes, dans lequel la seconde couche (12) a une épaisseur de 0,1 - 0,15 mm.
